# EUROPEAN PATENT APPLICATION

(11) **EP 1 612 552 A1**
(43) Date of publication of application: **04.01.2006**
(21) Application number: 05012610.1
(22) Date of filing: 13.06.2005
(51) Int. Cl.: G01N 30/06

(54) **Preparation method for sample for analysis of dioxins and preparation apparatus for the same**

(30) Priority: 29.06.2004 JP 2004191762
(71) Applicant: MIURA CO., LTD., Matsuyama-shi Ehime-ken (JP)
(72) Inventor: Honda, Katsuhisa, Matsuyama-shi Ehime-ken (JP); Hamada, Noriaki, Matsuyama-shi Ehime-ken (JP)
(74) Representative: Rees, Alexander Ellison

(57) **Abstract**

A highly reliable hydrophilic sample for analysis of dioxins suitable for analysis through a bioassay method is prepared from a hydrophilic solution of dioxins simply and in a short period of time. A preparation method for a sample for analysis of dioxins includes: supplying a hydrophobic solution of dioxins to a latter column (22) filled with a silica gel-based filler (22a) ; supplying to and passing through the latter column (22) supplied with the hydrophobic solution a hydrophobic solvent; supplying to and passing through a solvent substitution column (30) filled with an alumina-based filler (30a) the hydrophobic solvent passed through the latter column (22) ; supplying to and passing through the solvent substitution column (30) a hydrophilic solvent capable of dissolving dioxins from a second solvent supply part (70) in a direction opposite to the direction of the hydrophobic solvent passed through the solvent substitution column (30); and acquiring the hydrophilic solvent passed through the solvent substitution column (30).

## Description

### BACKGROUND OF THE INVENTION

### 1. Field of the Invention

The present invention relates to a preparation method for a sample for analysis and to a preparation apparatus for the same. The present invention more specifically relates to a preparation method for a sample for analysis of dioxins and to a preparation apparatus for the same.

### 2. Description of the Related Art

Dioxins are highly toxic environmental pollutants, and Law Concerning Special Measures Against Dioxins (Law No. 105 of 1999) requires periodical analysis of dioxins in an exhaust gas from waste incineration facilities, the atmosphere, water such as industrial waste water or river water, fly ash generated in the waste incineration facilities, soil, and the like. Here, the term "dioxins" used in the present application includes coplanar polychlorinated biphenyls (Co-PCBs) in addition to polychlorinated dibenzo-para-dioxins (PCDDs) and polychlorinated dibenzofurans (PCDFs) in accordance with Article 2 of Law Concerning Special Measures Against Dioxins.

In a case where dioxins in a fluid such as an exhaust gas or water or in soil are analyzed, the dioxins in a test sample such as an exhaust gas or soil must be collected as a sample for analysis. Examples of a method of collecting a sample for analysis of dioxins in an exhaust gas include: a method employing a glass impinger described in Japanese Industrial Standard JIS K0311:1999 (established on September 20, 1999); and methods employing filters described in JP 3273796 B, WO 01/91883, and JP 2004-53388 A. In those methods, in general, a sample for analysis of dioxins is eventually obtained as an extract of several tens to hundred and several tens ml by using a hydrophobic solvent such as toluene or n-hexane. The obtained extract is subjected to purification treatment by using a multilayer silica gel column or the like and is then generally analyzed by using a gas chromatograph-mass spectrometer (GC/MS).

Meanwhile, the term "dioxins" is a general term for various compounds including highly toxic compounds and mildly toxic compounds. Thus, analysis of dioxins often involves quantification in toxic equivalents (TEQ value) and evaluation based on the TEQ value for practical and beneficial reasons rather than comprehensive quantification evaluation. Examples of a method of evaluating a TEQ value of dioxins simply and rapidly which have been heretofore proposed include an immunoassay method (ELISA method, for example) and a bioassay method such as an EROD method or a DR-CALUX method (see: JP 2001-226371 A; News Release for "Ecoassay Dioxin ELISA Kit", available from Otsuka Pharmaceutical Co., Ltd., searched on June 26, 2004, internet URL: http://www.otsuka.co.jp/company/news/011212.htm; Product Information on "Ecoassay Dioxin ELISA Kit", available from Otsuka Pharmaceutical Co., Ltd., searched on June 26, 2004, internet URL: http://www.iwai-chem.co.jp/products/otuka/dioxin.htm#dioxin; Product Information on "Dioxin ELISAKit Wako", available from Wako Pure Chemical Industries, Ltd., searched on June 26, 2004, internet URL: http://www.wako-chem.co.jp/siyaku/journal/anal/pdf/ana127.pdf; News Release for "Immunoeco DXN", available from Cosmo Oil Co., Ltd., searched on June 26, 2004, internet URL: http://www2.cosmo-oil.co.jp/press/p_021218/index.html; Technical Data on "Immunoeco DXN", available from Cosmo Oil Co., Ltd., searched on June 26, 2004, internet URL: http://www2.cosmo-oil.co.jp/press/p_021218/1.pdf; Technical InformationManual for "DF1 Dioxin/Furan ImmunoassayKit", available from Cape Technologies L.L.C., searched on June 26, 2004, internet URL: http://www.cape-tech.com/; Product Information on "Dioxin ELISA Kit", available from Toyobo Co., Ltd., searched on June 26, 2004, internet URL: http://www.toyobo.co.jp/seihin/xr/olul/upld71/new/dioxinelis71 nr06.pdf; Product Information on "Ah Immunoassay" available from KUBOTA Corporation, searched on June 26, 2004, internet URL: http://tdh.kubota.co.jp/ahi/; Product Information on "RISc Dioxin Test Kit", available from AZmax Co., searched on June 26, 2004, internet URL: http://www.azmax.co.jp/idx02_product/kensa/field_10/riscpoluti on0501.pdf; "Bioassay monitoring of dechlorination treatment of dioxins", papers for 11th Symposium of Japan Society for Environmental Chemistry, p. 430 and 431, June 3 to 5, 2002, Japan Society for Environmental Chemistry; and Organohalogen Compounds, 45, 200-203 (2000), for example).

The bioassay method is an analytical method applying a biological reaction such as an antigen-antibody reaction, and requires a sample for analysis prepared by dissolving collected dioxins into a small amount of a hydrophilic solvent. The sample for analysis is generally prepared by: subjecting the above-described extract obtained by using a hydrophobic solvent, that is, a hydrophobic solution of dioxins to purification treatment by using a multilayer silica gel column or the like; substituting the hydrophobic solvent dissolving the dioxins with a hydrophilic solvent suitable for the bioassay method such as dimethylsulfoxide (DMSO) or alcohol; and concentrating the obtained hydrophilic solution of dioxins to a small amount of about several ml, or 1 ml or less.

Meanwhile, the method of substituting the hydrophobic solvent in the extract with the hydrophilic solvent and concentrating the hydrophilic solution is described in: "Bioassay monitoring of dechlorination treatment of dioxins", papers for 11th Symposium of Japan Society for Environmental Chemistry, p. 430 and 431, June 3 to 5, 2002, Japan Society for Environmental Chemistry; or Organohalogen Compounds, 45, 200-203 (2000), for example. The above-described methods each basically involve: removal of a hydrophobic solvent from an extract after purification under reduced pressure by using an evaporator; and addition of a small amount of a hydrophilic solvent such as DMSO to a residue (that is, sample of dioxins) for dissolution. In addition, a nitrogen gas is blown onto the obtained hydrophilic solution as required, to thereby further concentrate the hydrophilic solution. In this way, the target sample, that is, a hydrophilic sample for analysis of dioxins suitable for the bioassay method can be obtained.

However, the methods described in "Bioassay monitoring of dechlorination treatment of dioxins" (papers for 11th Symposium of Japan Society for Environmental Chemistry, p. 430 and 431, June 3 to 5, 2002, Japan Society for Environmental Chemistry) and Organohalogen Compounds, 45, 200-203 (2000) each require separate and manual operation for removing the hydrophobic solvent from the hydrophobic solution of dioxins and operation for dissolving the sample of dioxins after removal of the hydrophobic solvent into the hydrophilic solvent. Thus, the methods each involve complicated operations, and a long period of time is required to obtain a sample for analysis of dioxins. The sample for analysis may have varying a dioxin concentration depending on the technique and skill of an operator, and often lacks reliability such as in non-uniform precision of analysis values.

### SUMMARY OF THE INVENTION

The present invention has been made in view of the above, and an object of the present invention is therefore to allow simple preparation of a highly reliable hydrophilic sample for analysis of dioxins from a hydrophobic solution of dioxins in a short period of time.

A preparation method for a sample for analysis of dioxins according to the present invention is a method for preparing a hydrophilic sample for analysis of dioxins from a hydrophobic solution of dioxins. The preparation method of the present invention includes: supplying a hydrophobic solution of dioxins to a first column filled with a silica gel-based filler; supplying to and passing through the first column supplied with the hydrophobic solution a hydrophobic solvent; supplying to and passing through a second column filled with an alumina-based filler the hydrophobic solvent passed through the first column; supplying to and passing through the second column a hydrophilic solvent capable of dissolving dioxins in a direction opposite to the direction of the hydrophobic solvent passed through the second column; and acquiring the hydrophilic solvent passed through the second column.

In the preparation method, the dioxins in the hydrophobic solution supplied to the first column are dissolved in the hydrophobic solvent supplied to the first column and are passed through the first column with the hydrophobic solvent. At this time, impurities in the hydrophobic solution are trapped by the silica gel-based filler, and the impurities remain in the first column. The hydrophobic solvent passed through the first column is supplied to the second column. Then, the dioxins dissolved in the hydrophobic solvent are trapped by the alumina-based filler when the hydrophobic solvent is passed through the second column, and the dioxins remain in the second column. The dioxins trapped by the alumina-based filler are dissolved in the hydrophilic solvent and extracted when the hydrophilic solvent is supplied to and passed through the second column in a direction opposite to the direction of the hydrophobic solvent passed through the second column. The hydrophilic solvent supplied to and passed through the second column is acquired, to thereby obtain a hydrophilic sample for analysis of dioxins.

Here, the dioxins dissolved in the hydrophobic solvent, which is supplied to the second column from the first column, remain mainly in a vicinity of an end of the second column where the hydrophobic solvent flows in. Thus, the dioxins are dissolved in a small amount of the hydrophilic solvent passed through the second column in a direction opposite to the direction of the hydrophobic solvent passed through the second column, and are easily extracted from the second column. Therefore, the hydrophilic sample for analysis of dioxins obtained through the preparation method contains no excess hydrophilic solvent and is obtained in a small amount.

In general, the preparation method further includes supplying an inert gas to the second column before the supply of the hydrophilic solvent to the second column. In this case, the hydrophobic solvent passed through and remained in the second column can be removed by a flow of the inert gas, to thereby obtain a hydrophilic sample for analysis hardly containing the hydrophobic solvent as impurity.

In the preparation method, the hydrophobic solvent may be supplied to the first column while the first column is heated, for example. In this way, an effect of trapping the impurities in the hydrophobic solution by the silica gel-based filler can be enhanced in the first column. In the preparation method, the hydrophilic solvent may be supplied to the second column while the second column is heated, for example. In this way, the dioxins trapped in the second column may be extracted with a smaller amount of the hydrophilic solvent.

A preparation apparatus for a sample for analysis of dioxins according to the present invention is an apparatus for preparing a hydrophilic sample for analysis of dioxins from a hydrophobic solution of dioxins. The preparation apparatus of the present invention includes: a first column filled with a silica gel-based filler; a second column filled with an alumina-based filler; a supply path for supplying a hydrophobic solution of dioxins to the first column; a first solvent supply part for supplying a hydrophobic solvent to the first column; a column communication path for supplying the hydrophobic solvent to the second column from the first column; a second solvent supply part for supplying a hydrophilic solvent capable of dissolving dioxins to the second column; and a discharge path for discharging the hydrophilic solvent passed through the second column, in which the second solvent supply part is constituted to allow supply of the hydrophilic solvent to the second column in a direction opposite to the direction of the hydrophobic solvent supplied to the second column through the column communication path.

In the preparation apparatus, the dioxins in the hydrophobic solution supplied to the first column through the supply path are dissolved in the hydrophobic solvent supplied to the first column from the first solvent supply part, and are passed through the first column with the hydrophobic solvent. At this time, impurities in the hydrophobic solution are trapped by the silica gel-based filler, and the impurities remain in the first column. The hydrophobic solvent passed through the first column is supplied to the second column through the column communication path. Then, the dioxins dissolved in the hydrophobic solvent are trapped by the alumina-based filler when the hydrophobic solvent is passed through the second column, and the dioxins remain in the second column. The dioxins trapped by the alumina-based filler are dissolved in the hydrophilic solvent and extracted when the hydrophilic solvent is supplied to and passed through the second column from the second solvent supply part in a direction opposite to the direction of the hydrophobic solvent passed through the second column. Then, the dioxins are discharged from the discharge path as a hydrophilic sample for analysis of dioxins.

Here, the dioxins dissolved in the hydrophobic solvent, which is supplied to the second column from the first column, remain mainly in a vicinity of an end of the second column where the hydrophobic solvent flows in. Thus, dioxins are dissolved in a small amount of the hydrophilic solvent passed through the second column in a direction opposite to the direction of the hydrophobic solvent passed through the second column, and are easily extracted from the second column. Therefore, the hydrophilic sample for analysis of dioxins obtained in the preparation apparatus contains no excess hydrophilic solvent and is obtained in a small amount.

In general, the preparation apparatus further includes a gas supply part for supplying an inert gas to the second column. In this case, the hydrophobic solvent passed through and remained in the second column can be removed by a flow of the inert gas, to thereby obtain a hydrophilic sample for analysis hardly containing the hydrophobic solvent as impurity.

The preparation apparatus may further include heating means for the first column, for example. In this case, the hydrophobic solvent may be supplied to the first column while the first column is heated, to thereby enhance an effect of trapping the impurities in the hydrophobic solution by the silica gel-based filler in the first column. The preparation apparatus may further include heating means for the second column, for example. In this case, the hydrophilic solvent may be supplied to the second column while the second column is heated. In this way, dioxins trapped in the second column may be extracted with a smaller amount of the hydrophilic solvent.

The preparation method for a sample for analysis of dioxins according to the present invention includes the above-described steps, to thereby allow simple preparation of a highly reliable hydrophilic sample for analysis of dioxins from a hydrophobic solution of dioxins in a short period of time.

The preparation apparatus for a sample for analysis of dioxins according to the present invention includes the above-described constituent elements, to thereby allow simple preparation of a highly reliable hydrophilic sample for analysis of dioxins from a hydrophobic solution of dioxins in a short period of time.

### BRIEF DESCRIPTION OF THE DRAWINGS

In the accompanying drawings:
Fig. 1 is a schematic diagram of a preparation apparatus for a sample for analysis of dioxins according to an embodiment mode of the present invention; and
Fig. 2 is a graph showing the results of Example.

### DETAILED DESCRIPTION OF THE PREFERRED EMBODIMENTS

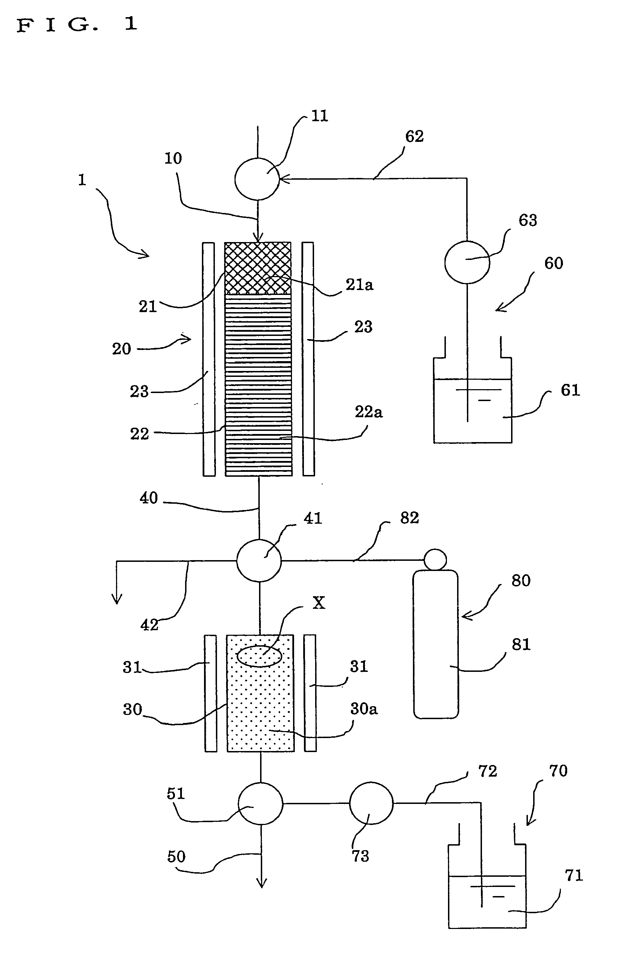

Description is given of an embodiment mode of a preparation apparatus for a sample for analysis of dioxins according to the present invention with reference to Fig. 1. In Fig. 1, a preparation apparatus 1 mainly includes: a sample supply path (example of supply path) 10; a purification column 20; a solvent substitution column (example of second column) 30; a column communication path 40; a solvent discharge path 50; a first solvent supply part 60; a second solvent supply part 70; and a gas supply part 80.

The sample supply path 10 is for supplying a hydrophobic solution of dioxins described below to the purification column 20, and includes a first valve 11.

The purification column 20 includes two columns of a former column 21 and a latter column 22 (example of first column) connected vertically, and has a first heating device 23 such as a heater. The former column 21 is opened at both ends, and the sample supply path 10 is connected to an opening of the former column 21 on the upper side. Further, the former column 21 is filled with a particulate holding material 21a for temporarily holding the hydrophobic solution from the sample supply path 10. The holding material 21a is capable of holding the hydrophobic solution within gaps of particles. Various holding materials can be used as long as dioxins in the hydrophobic solution may elute from the holding material when a hydrophobic solvent is supplied as described below. Preferable examples of the holding material include silica gel, alumina, diatomaceous earth, and sodium sulfate. The holding material may be used as a mixture of two or more types thereof as required.

Meanwhile, the latter column 22 is for removing impurities except dioxins from the hydrophobic solution. The latter column 22 is opened at both ends, and is filled with a silica gel-based filler 22a. The silica gel-based filler 22a is not particularly limited as long as the impurities in the hydrophobic solution may be trapped. In general, silica gel, silver nitrate silica gel, or sulfuric acid silica gel is preferably used. Two or more types of silica gel-based filler 22a may be used in combination. In this case, the silica gel-based filler 22a may be filled as a mixture of two or more types thereof in the latter column 22 or may be filled in multilayers of two or more types thereof.

The solvent substitution column 30 is filled with an alumina-based filler 30a for trapping dioxins dissolved in the hydrophobic solvent as described below. The solvent substitution column 30 is opened at both ends and includes a second heating device 31 such as a heater. The type of alumina-based filler 30a is not particularly limited, but any one of basic alumina, neutral alumina, and acidic alumina may generally be used as the alumina-based filler 30a.

The column communication path 40 is for communicating the latter column 22 of the purification column 20, and the solvent substitution column 30. One end of the column communication path 40 is communicated with an opening of the latter column 22 on the lower side. Further, the other end thereof is communicated with an opening of the solvent substitution column 30 on the upper side. The column communication path 40 includes a second valve 41. One end of an analysis sample discharge path 42 (example of discharge path) is communicated with the second valve 41, and the analysis sample discharge path 42 has an open end.

The solvent discharge path 50 extends from an opening of the solvent substitution column 30 on the lower side, includes a third valve 51, and has an open end. A solvent recovery tank (not shown) is arranged at the end of the solvent discharge path 50.

The first solvent supply part 60 includes: a first solvent tank 61; and a first solvent supply path 62 extending from the first solvent tank 61. The first solvent tank 61 is for storing a hydrophobic solvent, and includes a third heating device (not shown) for heating the hydrophobic solvent. Here, the hydrophobic solvent to be used is generally a nonpolar hydrocarbon solvent such as n-hexane or isooctane, and particularly preferably n-hexane. The first solvent supply path 62 is communicated with the first valve 11, and includes a first pump 63 for delivering the hydrophobic solvent in the first solvent tank 61 to a direction of the first valve 11.

The second solvent supply part 70 includes: a second solvent tank 71; and a second solvent supply path 72 extending from the second solvent tank 71. The second solvent tank 71 is for storing a hydrophilic solvent, and includes a fourth heating device (not shown) for heating the hydrophilic solvent. Here, the hydrophilic solvent to be used is not particularly limited as long as the solvent in a small amount is capable of dissolving dioxins. However, the hydrophilic solvent is generally dimethylsulfoxide (DMSO) or methanol, and particularly preferably dimethylsulfoxide. Dimethylsulfoxide may contain a surfactant added thereto. Examples of the surfactant to be used include: polyoxyethylene (20) sorbitan monolaurate ("Tween 20", trade name, available from Uniqema, for example); and polyoxyethylene (10) octylphenyl ether ("Triton X-100", trade name, available from Union Carbide Corporation, for example). An addition amount of the surfactant is adjusted to provide a concentration of preferably 0.001 to 1 wt%, more preferably 0.01 to 0.2 wt%.

The second solvent supply path 72 is communicated with the third valve 51, and includes a second pump 73 for delivering the hydrophilic solvent in the second solvent tank 71 to a direction of the third valve 51.

The gas supply part 80 includes: a gas cylinder 81 of an inert gas such as nitrogen; and a gas supply tube 82 extending from the gas cylinder 81 and connected to the second valve 41.

In the above-mentioned preparation apparatus 1, the first valve 11 is for switching a path for any one of communication between the sample supply path 10 and the former column 21, and communication between the first solvent supply path 62 and the former column 21. The second valve 41 is for switching a path for any one of communication between the latter column 22 and the solvent substitution column 30, communication between the gas supply tube 82 and the solvent substitution column 30, and communication between the solvent substitution column 30 and the analysis sample discharge path 42. The third valve 51 is for switching a path for any one of communication between the solvent substitution column 30 and the solvent discharge path 50, and communication between the second solvent supply path 72 and the solvent substitution column 30.

Next, description is given of a preparation method for a sample for analysis of dioxins by using the above-mentioned preparation apparatus 1. First, the first valve 11, the second valve 41, and the third valve 51 are set to predetermined initial states, respectively. That is, the first valve 11 is set to allow communication between the sample supply path 10 and the former column 21. The second valve 41 is set to allow communication between the latter column 22 and the solvent substitution column 30. The third valve 51 is set to allow communication between the solvent substitution column 30 and the solvent discharge path 50.

Next, a hydrophobic solution of dioxins is supplied to the sample supply path 10. Here, examples of the hydrophobic solution of dioxins to be supplied include: an extract obtained by collecting dioxins in a fluid such as an exhaust gas or industrial waste water generated from incineration facilities using an apparatus (described in Japanese Industrial Standard JIS K0311:1999, established on September 20, 1999), a filter (described in each of JP 3273796 B, WO 01/91883, and JP 2004-53388 A), or the like, and by extracting the collected dioxins with an organic solvent; and an extract obtained by extracting dioxins in soil, fly ash, or the like with an organic solvent. In general, the extract may be used as it is as the hydrophobic solution if the extract is obtained by extracting dioxins in a test sample such as a fluid, soil, or fly ash with a nonpolar hydrocarbon solvent (hydrophobic solvent) such as n-hexane through the above-described operation. Alternatively, the extract may be used as the hydrophobic solution by substituting the organic solvent used for extraction with a hydrophobic solvent such as n-hexane if the extract is obtained by extracting with other organic solvents such as toluene.

The hydrophobic solution of dioxins supplied to the sample supply path 10 is supplied to the former column 21 of the purification column 20 through the sample supply path 10, and is held by the holding material 21a. The total amount of the hydrophobic solution is supplied to the former column 21, and then the first heating device 23 is turned on to heat the former column 21 and the latter column 22. Next, the first valve 11 is operated and set to allow communication between the first solvent supply path 62 and the former column 21, and the first pump 63 is turned on. In this way, a hydrophobic solvent in the first solvent tank 61 is continuously supplied to the former column 21 through the first solvent supply path 62 and partly through the sample supply path 10. The hydrophobic solvent to be supplied is heated in the first solvent tank 61 in advance.

The hydrophobic solvent initially supplied to the former column 21 moves the hydrophobic solution of dioxins held by the holding material 21a of the former column 21 to the latter column 22. As a result, the hydrophobic solution of dioxins is supplied to the latter column 22. In this case, silica gel or alumina may be used as the holding material 21a of the former column 21, and thus impurities except dioxins in the hydrophobic solution are partly trapped by the holding material 21a. That is, the hydrophobic solution is subjected to preliminary purification treatment in the former column 21.

The hydrophobic solvent supplied to the former column 21 from the first solvent tank 61 is passed through the former column 21 and supplied to the latter column 22. The hydrophobic solvent supplied to the latter column 22 is passed through the latter column 22 while dissolving dioxins in the hydrophobic solution supplied to the latter column 22. In this case, the impurities except dioxins in the hydrophobic solution are trapped by the silica gel-based filler 22a. That is, the hydrophobic solution is subjected to purification treatment in the latter column 22.

In the above-describedprocedure, the first pump 63 is operated to adjust an amount of the hydrophobic solvent supplied from the first solvent tank 61 such that the total amount of dioxins in the hydrophobic solution supplied to the latter column 22 can be sufficiently dissolved in the hydrophobic solvent. In this way, the hydrophobic solvent supplied from the first solvent tank 61 flows into the column communication path 40 from the latter column 22 as a purified hydrophobic solution containing dissolved therein substantially the total amount of dioxins in the hydrophobic solution supplied to the latter column 22.

The purified hydrophobic solution from the latter column 22 is passed through the column communication path 40, and is continuously supplied to an upper end of the solvent substitution column 30. The dioxins in the purified hydrophobic solution supplied to the solvent substitution column 30 are trapped by the alumina-based filler 30a while the purified hydrophobic solution is passed through the solvent substitution column 30 from the upper end to the lower end. Thus, the hydrophobic solvent substantially alone is discharged from the solvent substitution column 30, and the hydrophobic solvent is recovered in the solvent recovery tank (not shown) through the solvent discharge path 50.

Here, the dioxins in the purified hydrophobic solution are easily trapped by the alumina-based filler 30a filled in the solvent substitution column 30. Thus, as shown in Fig. 1, the dioxins are trapped mainly focussed in the vicinity of the position X by the upper end of the solvent substitution column 30.

Next, the second valve 41 is operated to allow communication between the gas supply tube 82 and the solvent substitution column 30 to supply an inert gas to the gas supply tube 82 from the gas cylinder 81. The inert gas supplied to the gas supply tube 82 is passed partly through the column communication path 40 from the second valve 41, and is supplied to the solvent substitution column 30. The inert gas supplied to the solvent substitution column 30 is passed through the solvent substitution column 30, and is discharged to the outside through the solvent discharge path 50. In this case, the hydrophobic solvent remained in the solvent substitution column 30 evaporates into the inert gas passing through the solvent substitution column 30, and is discharged to the outside with the inert gas. As a result, the alumina-based filler 30a filled in the solvent substitution column 30 is subj ected to drying treatment into a state containing substantially no hydrophobic solvent.

In the drying treatment of the alumna-based filler 30a as described above, the inert gas may be supplied to the solvent substitution column 30 for a predetermined period of time, and then the second heating device 31 may be turned on to heat the solvent substitution column 30. In this way, the time period required for the drying treatment of the alumina-based filler 30a can be reduced efficiently. In the drying treatment, if the second heating device 31 is turned on from the start to heat the solvent substitution column 30, the dioxins held by the alumina-based filler 30a may partly elute from the solvent substitution column 30. Thus, a highly reliable hydrophilic sample for analysis of dioxins may not be obtained.

Next, the secondheating device 31 is turned on, or the operation of the second heating device 31 is continued to heat the solvent substitution column 30. The second valve 41 is operated to allow communication between the solvent substitution column 30 and the analysis sample discharge path 42. The third valve 51 is operated to allow communication between the second solvent supply path 72 and the solvent substitution column 30. The second pump 73 is turned on at this time, to thereby continuously supply a hydrophilic solvent stored in the second solvent tank 71 to the solvent substitution column 30 from the lower end to the upper end through the second solvent supply path 72, through the third valve 51, and partly through the solvent discharge path 50. That is, the hydrophilic solvent is supplied in a direction opposite to the direction of the hydrophobic solvent passed through the solvent substitution column 30.

The hydrophilic solvent supplied to the solvent substitution column 30 extracts the dioxins trapped by the alumina-based filler 30a, and flows into the analysis sample discharge path 42. Thus, the hydrophilic solvent (that is, hydrophilic solution of dioxins) discharged from the analysis sample discharge path 42 is acquired, to thereby obtain a target hydrophilic sample for analysis of dioxins. The sample for analysis contains substantially no hydrophobic solvent because the hydrophobic solvent is removed by the alumina-based filler 30a of the solvent substitution column 30 as described above, and is suitable for analysis of dioxins through a dioxin analysis method requiring a hydrophilic sample for analysis such as a bioassay method.

Here, the dioxins trapped by the alumina-based filler 30a are trapped focussed in the vicinity of the position X by the upper end of the solvent substitution column 30 as described above. Thus, a moving distance of the dioxins in the solvent substitution column 30 is small, and substantially all the dioxins are rapidly extracted with a small amount of the hydrophilic solvent. Therefore, a small amount of a sample for analysis having a higher dioxin concentration than that of the purified hydrophobic solution can be obtained from the analysis sample discharge path 42. To be specific, in a case where an amount of the purified hydrophobic solution supplied to the solvent substitution column 30 from the latter column 22 of the purification column 20 is about 100 ml, the hydrophilic sample for analysis of dioxins eventually obtained is significantly concentrated to an amount of about 1 ml.

The thus-obtained sample for analysis is a concentrated liquid in a small amount, and thus can be used as a sample for analysis of dioxins as it is through the bioassay method.

### Other embodiment modes

(1) In the above-described embodiment mode of the present invention, the hydrophobic solvent heated in advance is supplied to the purification column 20, but the hydrophobic solvent and the purification column 20 need not be heated. However, in general, both the hydrophobic solvent and purification column 20 are preferably heated, to thereby rapidly advance the purification treatment in the former column 21 and the latter column 22 and enhance a purification effect on the hydrophobic solution. Further, the dioxins dissolved in the hydrophobic solution may be moved to the solvent substitution column 30 from the purification column 20 with a smaller amount of the hydrophobic solvent.
(2) In the above-described embodiment mode of the present invention, the hydrophilic solvent is supplied to the heated solvent substitution column 30 and the dioxins are extracted from the alumina-based filler 30a, but the solvent substitution column 30 need not be heated. However, in general, the solvent substitution column 30 is preferably heated, to thereby reduce an amount of the hydrophilic solvent required for extraction of the dioxins trapped by the alumina-based filler 30a and easily obtain a highly concentrated sample for analysis in a small amount.
(3) In the above-described embodiment mode of the present invention, the purification column 20 is constituted by two columns of the former column 21 and the latter column 22, but the present invention may be worked in the same manner even when the former column 21 is omitted. However, in general, the former column 21 is preferably employed, to thereby allow efficient removal of the impurities in the hydrophobic solution of dioxins and enhance reliability of the target hydrophilic sample for analysis of dioxins.
(4) In the above-described embodiment of the present invention, the valves 11, 41, and 51, the pumps 63 and 73, and the heating devices 23 and 31 were each operated manually, but the operations thereof may be automated by computer control or the like.

### Example

A hydrophilic sample for analysis of dioxins was prepared by using the preparation apparatus 1 described in the above embodiment mode. For simplicity, an n-hexane solution containing respective, predetermined amounts of 7 types of PCDDs, 10 types of PCDFs, and 4 types of non-ortho Co-PCBs as dioxins was prepared. 5 ml of the n-hexane solution was supplied to the former column 21 of the purification column 20 from the sample supply path 10, to thereby prepare a target sample for analysis. In the preparation apparatus 1, the former column 21 and latter column 22 of the purification column20, and the solvent substitution column 30 were set as described below. The first solvent tank 61 stored n-hexane as a hydrophobic solvent. The second solvent tank 71 stored as a hydrophilic solvent dimethylsulfoxide containing 0.1 wt% polyoxyethylene (20) sorbitan monolaurate ("Tween 20", trade name, available from Uniqema).
· Former column
   Size: inner diameter of 12.5 mm, length of 20 mm
   Holding material: silica gel
· Latter column
   Size: inner diameter of 12.5 mm, length of 170 mm
   Silica gel-based filler: silver nitrate silica gel, sulfuric acid silica, or multilayer silica gel prepared by filling multilayers of silica gel
· Solvent substitution column
   Size: inner diameter of 6 mm, length of 30 mm
   Alumina-based filler: basic active alumina ("Super I", trade name, available from ICN Pharmaceuticals, Inc.)

In apreparationprocedure for a sample for analysis of dioxins, n-hexane heated to 60°C was supplied to the purification column 20 at a flow rate of 2.5 ml/minute until a total amount thereof was 100 ml, and the purification column 20 was heated to 60°C. The solvent substitution column 30 was heated to 60°C, and a flow rate of dimethylsulfoxide supplied to the solvent substitution column 30 from the second solvent tank 71 was set to 1.25 ml/minute. A nitrogen gas was supplied at a flow rate of 50 ml/minute from the gas supplypart 80 for the drying treatment of the solvent substitution column 30. Then, a dimethylsulfoxide solution (sample for analysis) of dioxins discharged from the analysis sample discharge path 42 was collected in 1-ml fractions by using a fraction collector. A time period required for acquiring the first 1-ml fraction from the start of n-hexane supply to the purification column 20 from the first solvent tank 61 was 80 minutes.

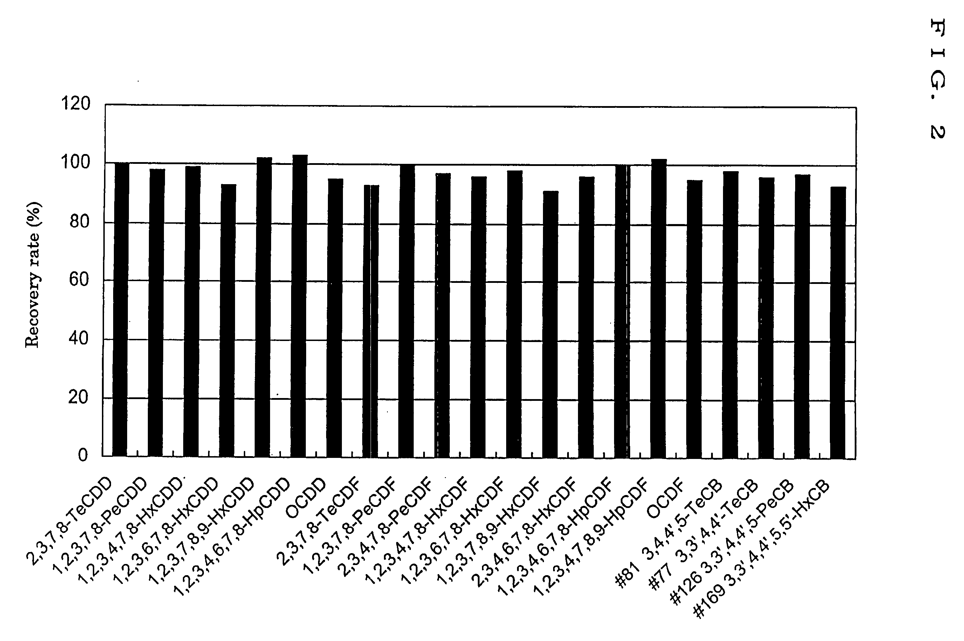

The first 1-ml fraction of the sample for analysis sampled by the fraction collector was analyzed through a GC/MS method, and a recovery rate of each compound of dioxins was determined. Table 1 and Fig. 2 show the results. Fig. 2 shows the results of Table 1 in a graph. The recovery rate (%) refers to a ratio (B/A × 100) of an amount of dioxins in the sample for analysis (B) to an amount of specific dioxins in the n-hexane solution (A). The results reveal that the total amount of dioxins in the n-hexane solution supplied to the purification column 20 was substantially included in the first 1-ml fraction of the sample for analysis. Thus, the n-hexane solution of dioxins can be converted into the dimethylsulfoxide solution of dioxins and concentrated in a short period of time by using the above-described preparation apparatus 1.

**Table 1**

| Dioxins | | Recovery rate (%) |
|---|---|---|
| PCDDs | 2,3,7,8-TeCDD | 100 |
| | 1,2,3,7,8-PeCDD | 98 |
| | 1,2,3,4,7,8-HxCDD | 99 |
| | 1,2,3,6,7,8-HxCDD | 93 |
| | 1,2,3,7,8,9-HxCDD | 102 |
| | 1,2,3,4,6,7,8-HpCDD | 103 |
| | OCDD | 95 |
| PCDFs | 2,3,7,8-TeCDF | 93 |
| | 1,2,3,7,8-PeCDF | 100 |
| | 2,3,4,7,8-PeCDF | 97 |
| | 1,2,3,4,7,8-HxCDF | 96 |
| | 1,2,3,6,7,8-HxCDF | 98 |
| | 1,2,3,7,8,9-HxCDF | 91 |
| | 2,3,4,6,7,8-HxCDF | 96 |
| | 1,2,3,4,6,7,8-HpCDF | 100 |
| | 1,2,3,4,7,8,9-HpCDF | 102 |
| | OCDF | 95 |
| Non-ortho Co-PCBs | #81 3,4,4',5-TeCB | 98 |
| | #77 3,3',4,4'-TeCB | 96 |
| | #126 3,3',4,4',5-PeCB | 97 |
| | #169 3,3',4,4',5,5'-HxCB | 93 |

## Claims

1. A preparation method for a sample for analysis of dioxins for preparing a hydrophilic sample for analysis of dioxins from a hydrophobic solution of dioxins, the preparation method **characterized by** comprising:
supplying the hydrophobic solution of dioxins to a first column (22) filled with a silica gel-based filler (22a);
supplying to and passing through the first column (22) supplied with the hydrophobic solution a hydrophobic solvent;
supplying to and passing through a second column (30) filled with an alumina based filler (30a) the hydrophobic solvent passed through the first column (22);
supplying to and passing through the second column (30) a hydrophilic solvent capable of dissolving dioxins in a direction opposite to the direction of the hydrophobic solvent passed through the second column (30); and
acquiring the hydrophilic solvent passed through the second column (30).

2. A preparation method for a sample for analysis of dioxins according to claim 1, **characterized by** further comprising supplying an inert gas to the second column (30) before the supply of the hydrophilic solvent to the second column (30).

3. A preparation method for a sample for analysis of dioxins according to claim 1 or 2, **characterized in that** the hydrophobic solvent is supplied to the first column (22) while the first column (22) is heated.

4. A preparation method for a sample for analysis of dioxins according to any one of claims 1 to 3, **characterized in that** the hydrophilic solvent is supplied to the second column (30) while the second column (30) is heated.

5. A preparation apparatus for a sample for analysis of dioxins for preparing a hydrophilic sample for analysis of dioxins from a hydrophobic solution of dioxins, the preparation apparatus **characterized by** comprising:
a first column (22) filled with a silica gel-based filler (22a) ;
a second column (30) filled with an alumina based filler (30a) ;
a supply path for supplying the hydrophobic solution of dioxins to the first column (22);
a first solvent supply part (60) for supplying a hydrophobic solvent to the first column (22);
a column communication path (40) for supplying the hydrophobic solvent to the second column (30) from the first column (22);
a second solvent supply part (70) for supplying the hydrophilic solvent capable of dissolving dioxins to the second column (30); and
a discharge path for discharging the hydrophilic solvent passed through the second column (30), wherein
the second solvent supply part (70) is constituted to allow supply of the hydrophilic solvent to the second column (30) in a direction opposite to the direction of the hydrophobic solvent supplied to the second column (30) from the column communication path (40).

6. A preparation apparatus for a sample for analysis of dioxins according to claim 5, **characterized by** further comprising a gas supply part (80) for supplying an inert gas to the second column (30).

7. A preparation apparatus for a sample for analysis of dioxins according to claim 5 or 6, **characterized by** further comprising heating means for the first column (22).

8. A preparation apparatus for a sample for analysis of dioxins according to any one of claims 5 to 7, **characterized by** further comprising heating means for the second column (30).
